# EUROPEAN PATENT APPLICATION

(11) **EP 4 446 681 A1**
(43) Date of publication of application: **16.10.2024**
(21) Application number: 22904476.3
(22) Date of filing: 03.11.2022
(51) Int. Cl.: F27B 9/04, F27B 9/02, F27B 9/20, H01M 4/139

(54) **APPARATUS FOR FIRING CATHODE MATERIAL OF SECONDARY BATTERY**

(30) Priority: 10.12.2021 KR 20210176506
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR); Posco Future M Co., Ltd, Pohang-si, Gyeongsangbuk-do 37918 (KR)
(72) Inventor: YANG, Choongmo, Pohang-si, Gyeongsangbuk-do 37661 (KR); JUNG, Keeyoung, Pohang-si, Gyeongsangbuk-do 37667 (KR); HWANG, Min Young, Busan 48081 (KR); KIM, Yeong Woo, Pohang-si, Gyeongsangbuk-do 37650 (KR); HWANG, Soon Cheol, Pohang-si, Gyeongsangbuk-do 37671 (KR); HEO, Jeong Heon, Pohang-si, Gyeongsangbuk-do 37673 (KR); PARK, Yooncheol, Busan 48309 (KR)
(74) Representative: Pfenning, Meinig & Partner mbB
(86) International application number: PCT/KR2022/017146
(87) International publication number: WO 2023/106642

(57) **Abstract**

Provided is an apparatus for firing a cathode material of a secondary battery which fires a cathode material for a secondary battery by moving the cathode material in a horizontal direction, including: a firing furnace including an air supply part which is placed in a lower portion and to which gas is supplied, an exhaust part which is placed in an upper portion and from which the gas is exhausted, and a firing space which is placed between the air supply part and the exhaust part and extended in a vertical direction intersecting the horizontal direction; a heater which heats the firing space of the firing furnace; a plurality of saggers which store the cathode material for a secondary battery and are stacked in the vertical direction in the firing space; and a pusher which has the plurality of saggers settled therein and moves the plurality of saggers in the horizontal direction.

## Description

### [Technical Field]

The present disclosure relates to an apparatus for firing a cathode material of a secondary battery.

### [Background Art]

In general, an apparatus for firing a cathode material of a secondary battery is an apparatus which fires a sagger for storing a cathode material at a temperature of 400 to 1100°C depending on the characteristics of materials in a firing furnace.

In a firing process using the apparatus for firing a cathode material of a secondary battery, water vapor, carbon dioxide gas, and the like are produced from the cathode material for a secondary battery stored in the sagger, and among them, since carbon dioxide gas has a higher molecular weight than oxygen or air used for adjusting a firing furnace atmosphere, it is difficult to release the carbon dioxide gas outside the sagger. The oxidation carbon gas remaining inside the sagger causes a chemical reaction with a lithium oxide on a surface of a cathode active material fired from a cathode material to produce lithium carbonate.

A conventional apparatus for firing a cathode material of a secondary battery releases water vapor and carbon dioxide gas produced from the cathode material stored in a sagger to the outside of the sagger, and simultaneously supplies gas such as oxygen and air to a lower portion, an upper portion, and a side portion of a firing space in which the sagger moving in one direction is placed, for a firing reaction.

However, in the conventional apparatus for firing a cathode material of a secondary battery, since a cross-sectional area of a window of the sagger, through which gas is introduced from the outside of the sagger to the inside of the sagger, is very smaller than a cross-sectional area of a firing space in which the sagger is placed, only a very small amount of the total flow rate of gas passing through the cross-section of the firing space is introduced to the inside of the sagger.

### [Disclosure]

### [Technical Problem]

The present disclosure attempts to provide an apparatus for firing a cathode material of a secondary battery capable of increasing a flow rate of gas supplied to a cathode material for a secondary battery stored in a sagger, thereby improving emission of carbon dioxide gas produced from the cathode material for a secondary battery, and also improving a firing reaction of a cathode material for a secondary battery.

In addition, the present disclosure attempts to provide an apparatus for firing a cathode material of a secondary battery capable of securing a gas flow supplied to all cathode materials for a secondary battery stored in a sagger, even in the case of storing more cathode material for a secondary battery in the sagger, thereby suppressing deterioration of firing quality of the cathode material for a secondary battery and simultaneously improving production.

In addition, the present disclosure attempts to provide an apparatus for firing a cathode material of a secondary battery capable of adjusting characteristics of gas supplied depending on firing space positions in which the sagger is placed, thereby reducing a manufacturing time and a manufacturing cost of a cathode material of a secondary battery.

In addition, the present disclosure attempts to provide an apparatus for firing a cathode material of a secondary battery having improved manufacturing efficiency of a cathode material for a secondary battery by increasing production of a cathode material for a secondary battery and simultaneously decreasing the number of saggers, since the size of the sagger may be adjusted in a firing furnace of the same size by minimizing a size of a space vulnerable to gas flow.

### [Technical Solution]

In one general aspect, an apparatus for firing a cathode material of a secondary battery which fires a cathode material for a secondary battery by moving the cathode material in a horizontal direction includes: a firing furnace including an air supply part which is placed in a lower portion and to which gas is supplied, an exhaust part which is placed in an upper portion and from which the gas is exhausted, and a firing space which is placed between the air supply part and the exhaust part and extended in a vertical direction intersecting the horizontal direction; a heater which heats the firing space of the firing furnace; a plurality of saggers which store the cathode material for a secondary battery and are stacked in the vertical direction in the firing space; and a pusher which has the plurality of saggers settled therein and moves the plurality of saggers in the horizontal direction, wherein the gas in the firing space moves in the vertical direction from a bottom to a top of the plurality of saggers and moves in the horizontal direction on the top of the plurality of saggers.

The gas may move only in the vertical direction inside the plurality of saggers.

Each of the plurality of saggers may include a lower part which is positioned under the cathode material for a secondary battery and has a plurality of slits formed thereon, a wall part which is positioned by a side of the cathode material for a secondary battery and seals the cathode material for a secondary battery in the horizontal direction, and an opening which is formed by the wall part on the cathode material for a secondary battery and exposes the cathode material for a secondary battery.

The gas may move from the plurality of slits through the cathode material for a secondary battery to the opening.

The firing space may include a heating space, a temperature maintaining space, and a cooling space, which are arranged sequentially in the horizontal direction.

The pusher may move the plurality of saggers from the temperature rising space through the temperature maintaining space to the cooling space.

The pusher may stop the plurality of saggers for a predetermined time in each of the temperature rising space, the temperature maintaining space, and the cooling space.

The gas may include a first sub-gas supplied to the temperature rising space, a second sub-gas supplied to the temperature maintaining space, and a third sub-gas supplied to the cooling space.

Each of the first sub-gas, the second sub-gas, and the third sub-gas may be preheated to different temperatures from each other.

The second sub-gas may be preheated to a higher temperature than the first sub-gas and the third sub-gas.

Each of the first sub-gas, the second sub-gas, and the third sub-gas may have different flow rates from each other.

The flow rate of the first sub-gas and the flow rate of the third sub-gas may be higher than the flow rate of the second sub-gas.

The first sub-gas, the second sub-gas, and the third sub-gas may have different compositions from each other.

The heater may be extended in the vertical direction.

The heater may include a first sub-heater which is placed in one side portion of the firing space, a second sub-heater which is separated from the first sub-heater with the firing space interposed therebetween and is placed in the other side portion of the firing space, a third sub-heater which is placed between the first sub-heater and the second sub-heater inside the firing space, and a fourth sub-heater which is placed in a lower portion of the firing space.

The pusher may include a large plate in which the plurality of saggers are settled and a moving part which moves the large plate in the horizontal direction.

The large plate may include through holes which correspond to the plurality of saggers and communicate with the air supply part.

The cathode material for a secondary battery may be in a granule or briquette form.

The plurality of saggers may be stacked in 3 to 30 layers in the vertical direction and move in the horizontal direction.

### [Advantageous Effects]

According to an exemplary embodiment, an apparatus for firing a cathode material of a secondary battery which increases a flow rate of gas supplied to a cathode material for a secondary battery stored in a sagger to improve emission of carbon dioxide gas produced from the cathode material for a secondary battery and simultaneously improve a firing reaction of the cathode material for a secondary battery is provided.

In addition, an apparatus for firing a cathode material of a secondary battery which secures gas flows supplied to all cathode materials for a secondary battery stored in the sagger, even when more cathode materials for a secondary battery are stored in the sagger, thereby suppressing deterioration of firing quality of the cathode material for a secondary battery and simultaneously improving production is provided.

In addition, an apparatus for firing a cathode material of a secondary battery which adjusts characteristics of gas supplied depending on the position of the firing space in which the sagger is placed, thereby reducing a manufacturing time and a manufacturing cost of the cathode material for a secondary battery is provided.

In addition, an apparatus for firing a cathode material of a secondary battery which may minimize a size of a space vulnerable to gas flow to adjust a size of saggers in a firing furnace of the same size, and thus, increases production of the cathode material for a secondary battery and simultaneously decreases the number of saggers to improve manufacturing efficiency of the cathode material for a secondary battery is provided.

### [Description of the Drawings]

FIG. 1 is a drawing showing a side of an apparatus for firing a cathode material of a secondary battery according to an exemplary embodiment.
FIG. 2 is a drawing showing a front of the apparatus for firing a cathode material of a secondary battery according to an exemplary embodiment.
FIG. 3 is a drawing showing gas flows in the apparatus for firing a cathode material of a secondary battery according to an exemplary embodiment.
FIG. 4 is drawings showing production of a cathode material for a secondary battery depending on the size and the number of layers of saggers, in apparatuses for firing a cathode material of a secondary battery according to the comparative example and an exemplary embodiment.

### [Mode for Invention]

The present disclosure will be described more fully hereinafter with reference to the accompanying drawings, in which exemplary embodiments of the disclosure are shown. As those skilled in the art would realize, the described embodiments may be modified in various different ways, all without departing from the scope of the present disclosure.

In addition, unless explicitly described to the contrary, the word "comprise", and variations such as "comprises" or "comprising", will be understood to imply the inclusion of stated elements but not the exclusion of any other elements.

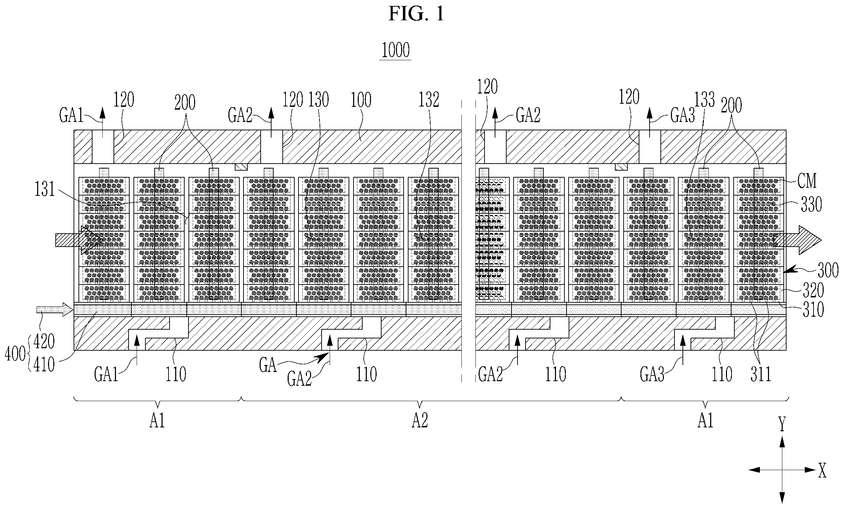

Hereinafter, referring to FIGS. 1 to 4, an apparatus for firing a cathode material of a secondary battery according to an exemplary embodiment will be described.

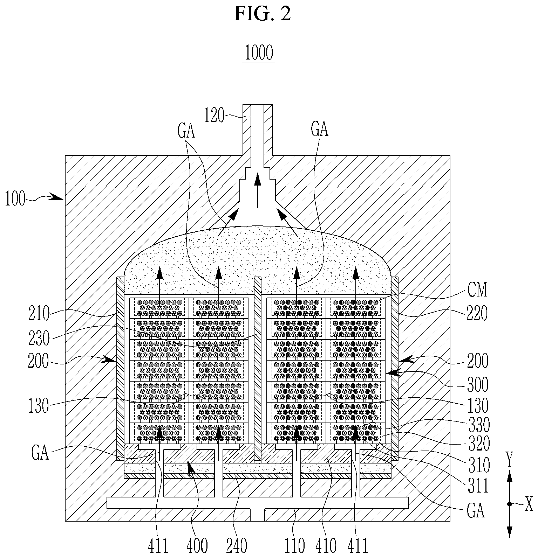

FIG. 1 is a drawing showing a side of an apparatus for firing a cathode material of a secondary battery according to an exemplary embodiment. FIG. 2 is a drawing showing a front of the apparatus for firing a cathode material of a secondary battery according to an exemplary embodiment.

Referring to FIGS. 1 and 2, an apparatus for firing a cathode material of a secondary battery 1000 according to an exemplary embodiment heats a plurality of saggers 300 which have a cathode material for a secondary battery (CM) stored therein and are stacked in a vertical direction (Y), while moving the saggers in a horizontal direction (X) intersecting the vertical direction (Y), in a firing space 130 placed inside a firing furnace 100, and simultaneously supplies gas (GA) including oxygen to fire the cathode material for a secondary battery (CM) stored in the plurality of saggers 300.

The apparatus for firing a cathode material of a secondary battery 1000 includes a temperature rising section (A1), a temperature maintaining section (A2), and a cooling section (A3).

The temperature rising section (A1) is a section in which a temperature is raised to a predetermined temperature (as an example, 400°C to 1100°C) depending on the characteristics of the cathode material for a secondary battery (CM) stored in the plurality of saggers 300.

The temperature maintaining section (A2) is a section in which the predetermined temperature is maintained.

The cooling section (A3) is a section of cooling from the predetermined temperature.

The apparatus for firing a cathode material of a secondary battery 1000 includes a firing furnace 100, a heater 200, a plurality of saggers 300, and a pusher 400.

The firing furnace 100 is extended in the horizontal direction (X) and includes an air supply part 110, an exhaust part 120, and a firing space 130.

The air supply part 110 is placed in a lower portion of the firing furnace 100, and gas (GA) is supplied to the firing space 130 inside the firing furnace 100 through the air supply part 110. The gas (GA) supplied to the firing space 130 through the air supply part 110 is discharged to the exhaust part 120 through the cathode material for a secondary battery (CM) stored in the plurality of saggers 300 stacked in the vertical direction (Y). The gas (GA) supplied to the firing space 130 through the air supply part 110 may include air and oxygen gas, but is not limited thereto.

The exhaust part 120 is placed in a lower portion of the firing furnace 100, and the gas (GA) placed in the firing space 130 inside the firing furnace 100 is exhausted to the outside through the exhaust part 120. The gas (GA) exhausted from the firing space 130 through the exhaust part 120 may further include carbon dioxide gas and water vapor discharged from the cathode material for a secondary battery (CM) stored in the plurality of saggers 300, in addition to the air and the oxygen gas supplied to the firing space 130 through the air supply part 110, but is not limited thereto.

The firing space 130 communicates with the air supply part 110 and the exhaust part 120 between the air supply part 110 and the exhaust part 120. The firing space 130 is extended in the horizontal direction (X) which is an extension direction of the firing furnace 100 and simultaneously extended in the vertical direction (Y) intersecting the horizontal direction (X). The firing space 130 is a space in which the plurality of saggers 300 having the cathode material for a secondary battery (CM) stored therein move in the horizontal direction (X) and simultaneously a space in which the gas (GA) supplied to the firing space 130 from the air supply part 110 moves in the vertical direction (Y).

The firing space 130 includes a temperature rising space 131, a temperature maintaining space 132, and a cooling space 133, which are arranged sequentially in the horizontal direction (X). To the firing space 130, the gas (GA) is supplied through the air supply part 110, and the gas (GA) includes a first sub-gas (GA1) supplied to the temperature rising space 131, a second sub-gas (GA2) supplied to the temperature maintaining space 132, and a third sub-gas (GA3) supplied to the cooling space 133.

The temperature rising space 131 is a space corresponding to the temperature rising section (A1). The temperature rising space 131 is extended in the vertical direction (Y), and communicates with the temperature maintaining space 132 in the horizontal direction (X). To the temperature rising space 131, the first sub-gas (GA1) is supplied through the air supply part 110.

The temperature maintaining space 132 is a space corresponding to the temperature maintaining section (A2). The temperature of the temperature maintaining space (S2) is higher than the temperature of the temperature rising space (S1) and the temperature of the cooling space (S3). The temperature maintaining space 132 is extended in the vertical direction (Y), and communicates with the temperature rising space 131 and the cooling space 133 in the horizontal direction (X) between the temperature rising space 131 and the cooling space 133. To the temperature maintaining space 132, the second sub-gas (GA2) is supplied through the air supply part 110.

The cooling space 133 is a space corresponding to the cooling section (A3). The cooling space 133 is extended in the vertical direction (Y), and communicates with the temperature maintaining space 132 in the horizontal direction (X). To the cooling space 133, the third sub-gas (GA3) is supplied through the air supply part 110.

Each of the first sub-gas (GA1), the second sub-gas (GA2), and the third sub-gas (GA3) which is supplied to each of the temperature rising space 131, the temperature maintaining space 132, and the cooling space 133 are preheated to different temperatures from each other. As an example, the second sub-gas (GA2) supplied to the temperature maintaining space 132 may be preheated to a higher temperature than the first sub-gas (GA1) and the third sub-gas (GA3), but is not limited thereto.

Each of the first sub-gas (GA1), the second sub-gas (GA2), and the third sub-gas (GA3) may have different flow rates from each other. As an example, the flow rate of the first sub-gas (GA1) and the flow rate of the third sub-gas (GA3) may be higher than the flow rate of the second sub-gas GA2, but the present disclosure is not limited thereto.

Each of the first sub-gas (GA1), the second sub-gas (GA2), and the third sub-gas (GA3) may have different compositions from each other.

The heater 200 heats the firing space 130 of the firing furnace 100. The heater 200 is extended in the vertical direction (Y), but is not limited thereto. There are a plurality of heaters 200, and the plurality of heaters 200 are arranged separately from each other along the horizontal direction (X). Referring to FIG. 2, the heater 200 includes a first sub-heater 210, a second sub-heater 220, a third sub-heater 230, and a fourth sub-heater 240.

The first sub-heater 210 is placed in one side portion of the firing space 130.

The second sub-heater 220 is separated from the first sub-heater 210 with the firing space 130 interposed therebetween. The second sub-heater 220 is placed in the other side portion of the firing space 130.

The third sub-heater 230 is placed between the first sub-heater 210 and the second sub-heater 220 inside the firing space 130. The plurality of saggers 300 stacked in the vertical direction (Y) are placed between the third sub-heater 230 and the first sub-heater 210, and the plurality of saggers 300 stacked in the vertical direction (Y) are placed between the third sub-heater 230 and the second sub-heater 220.

The fourth sub-heater 240 is placed in a lower portion of the firing space 130.

The heater 200 may include various heating means known in the art.

The plurality of saggers 300 store the cathode material for a secondary battery (CM) in a granule or briquette form. The plurality of saggers 300 are stacked in the vertical direction (Y) in the firing space 130 of the firing furnace 100 and move in the horizontal direction (X). The cathode material for a secondary battery (CM) stored in the plurality of saggers 300 reacts with the gas (GA) moving in the vertical direction (Y) which is the stacking direction of the plurality of saggers 300, and is simultaneously heated and fired while moving in the horizontal direction (X) to the temperature rising space 131, the temperature maintaining space 132, and the cooling space 133. Each of the plurality of saggers 300 includes a lower part 310, a wall part 320, and an opening 330.

The lower part 310 is positioned under the cathode material for a secondary battery (CM) and supports the cathode material for a secondary battery (CM). In the lower part 310, a plurality of penetrating slits 311 through which gas (GA) passes are formed.

The wall part 320 is positioned by the side of the cathode material for a secondary battery (CM) and seals the cathode material for a secondary battery (CM) in the horizontal direction (X). The wall part 320 prevents gas (GA) supplied into the sagger 300 from moving in the horizontal direction (X) through the plurality of slits 311 in the lower part 310.

The opening 330 is positioned on the cathode material for a secondary battery (CM). The opening 330 includes a space on the cathode material for a secondary battery (CM) formed by the wall part 320 and exposes the upper portion of the cathode material for a secondary battery (CM). The gas (GA) supplied into one sagger 300 through the plurality of slits 311 of the lower part 310 moves in the vertical direction (Y) through the opening 330 and is supplied into the other sagger 300.

The gas (GA) which moves in the vertical direction (Y) inside the plurality of saggers 300 moves from the plurality of slits 311 through the cathode material for a secondary battery (CM) to the opening 330 to move in the vertical direction (Y) inside the plurality of saggers 300.

The plurality of saggers 300 may move in the horizontal direction (X) in the state of being stacked in 3 to 30 layers in the vertical direction (Y), but are not limited thereto.

The pusher 400 supports the plurality of saggers 300 and moves the plurality of saggers 300 in the horizontal direction (X). In the pusher 400, the plurality of saggers 300 are settled. The pusher 400 moves the plurality of saggers 300 stacked in the vertical direction from the temperature rising space 131 inside the firing furnace 100 through the temperature maintaining space 132 to the cooling space 133. The pusher 400 stops the plurality of saggers 300 for a predetermined time in each of the temperature rising space 131, the temperature maintaining space 132, and the cooling space 133, and sequentially moves them to each space. The pusher 400 includes a large plate 410 and a moving part 420.

The large plate 410 is placed under the plurality of saggers 300. In the large plate 410, the plurality of saggers 300 are settled. Referring to FIG. 2, the large plate 410 corresponds to the plurality of saggers 300 and includes a through hole 411 communicating with the air supply part 110. The gas (GA) supplied through the air supply part 110 is supplied into the plurality of saggers 300 through the through hole 411 of the large plate 410.

The moving part 420 moves the large plate 410 in the horizontal direction (X). The moving part 420 may include various known moving means, for example, a pressurization means such as a pressurizer and a transfer means such as a belt conveyor.

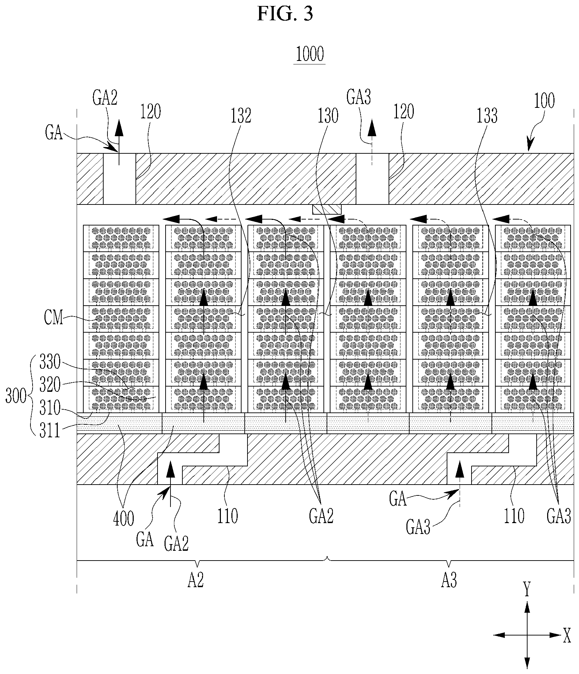

FIG. 3 is a drawing showing gas flows in the apparatus for firing a cathode material of a secondary battery according to an exemplary embodiment.

Referring to FIG. 3, the gas (GA) in the firing space 130 of the firing furnace 100 moves in the vertical direction (Y) from the bottom to the top of the plurality of saggers 300 and in the horizontal direction (X) on the top of the plurality of saggers 300. The gas (GA) moves only in the vertical direction (Y) inside the plurality of saggers 300.

Since the apparatus for firing a cathode material of a secondary battery 1000 according to an exemplary embodiment includes a vertical flow structure in which the gas (GA) moves in the vertical direction (Y) inside the plurality of saggers 300, the plurality of saggers 300 do not need a window in an opening form for horizontal flow including a side air supply. Thus, more cathode materials for a secondary battery (CM) may be charged into the sagger 300 of the same size. In addition, in the apparatus for firing a cathode material of a secondary battery 1000 according to an exemplary embodiment, a charge amount of the cathode material for a secondary battery (CM) to the sagger 300 is increased, but basic gas (GA) flows are secured around all of the cathode materials for a secondary battery (CM) stored in the plurality of saggers 300 in the vertical flow structure, and thus, firing quality deterioration is suppressed.

Specifically, in the apparatus for firing a cathode material of a secondary battery 1000 according to an exemplary embodiment, the gas (GA) moves in the vertical direction (Y) from the bottom to the top of the plurality of saggers 300 and moves in the horizontal direction (X) on the top of the plurality of saggers 300 inside the plurality of saggers 300, whereby the gas (GA) moves in the vertical direction (Y) in an almost sealed form inside the plurality of saggers 300, and thus, most of the gas (GA) supplied into the plurality of saggers 300 passes around the cathode material for a secondary battery (CM), and simultaneously carbon dioxide gas and the like produced from the cathode material for a secondary battery (CM) are easily released from the plurality of saggers 300.

That is, an apparatus for firing a cathode material of a secondary battery 1000 which increases the flow rate of the gas (GA) supplied to the cathode material for a secondary battery (CM) stored in the plurality of saggers 300 to improve carbon dioxide gas discharge from the cathode material for a secondary battery (CM) and simultaneously improve a firing reaction of the cathode material for a secondary battery (CM) is provided.

In addition, an apparatus for firing a cathode material of a secondary battery 1000 which, though more cathode materials for a secondary battery (CM) are stored in the plurality of saggers 300, secures the gas flow supplied to all of the cathode material for a secondary battery (CM) stored in the plurality of saggers 300, thereby suppressing deterioration of firing quality of the cathode material for a secondary battery (CM) and simultaneously having improved production is provided.

Since in the apparatus for firing a cathode material of a secondary battery 1000 according to an exemplary embodiment, the gas (GA) supplied to the air supply part 110 under the plurality of saggers 300 exits the sagger 300 at the top via the cathode material for a secondary battery (CM) inside the plurality of saggers 300 in the vertical direction (Y) and then is incorporated with other gases (GA), a gas atmosphere which is basically gone through by the cathode material for a secondary battery (CM) may be limited to the atmosphere of the gas (GA) supplied in the lower portion. Due to the characteristics, gas supply conditions of supplying certain gas to a desired area considering the firing reaction may be freely implemented.

Specifically, though the third sub-gas (GA3) has at least one of a higher flow rate, a lower preheating temperature, or other compositions as compared with the second sub-gas (GA2) for cooling the plurality of saggers 300 which goes through the temperature maintaining space 132 in the cooling space 133, the third sub-gas (GA3) exits the inside of the plurality of saggers 300 placed in the cooling space 133 from the bottom to the top in the vertical direction (Y), and then is mixed with the second sub-gas (GA2) which exits the inside of the plurality of saggers 300 placed in the temperature maintaining space 132 from the bottom to the top in the vertical direction (Y), and thus, an influence of the third sub-gas (GA3) supplied to the cooling space 133 on the temperature maintaining space 132 and the temperature rising space 131 may be minimized, which is favorable for reducing oxygen costs.

That is, the characteristics of the gas (GA) supplied depending on the position of the firing space 130 in which the plurality of saggers 300 are placed are adjusted, thereby providing an apparatus for firing a cathode material of a secondary battery 1000 of which the manufacturing time and the manufacturing cost of the cathode material for a secondary battery (CM) are reduced.

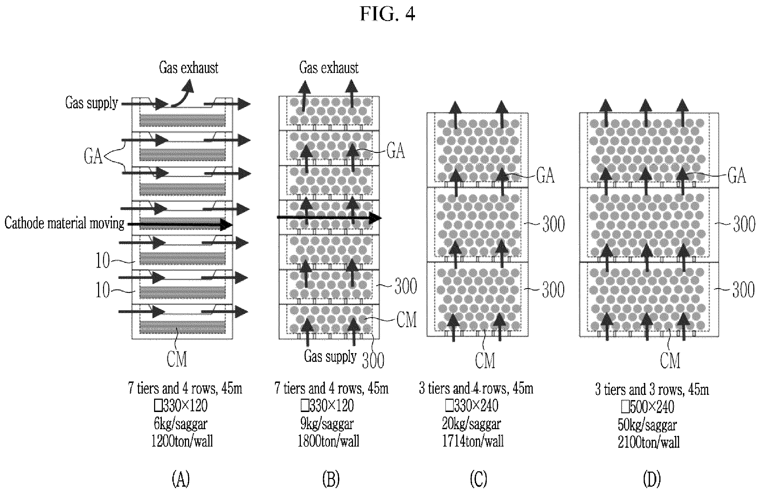

FIG. 4 is drawings showing production of a cathode material for a secondary battery depending on the size and the number of layers of saggers, in apparatuses for firing a cathode material of a secondary battery according to the comparative example and an exemplary embodiment. In FIG. 4, (A) is the comparative example, and each of (B), (C), and (D) is the experimental examples of the production of the cathode material for a secondary battery depending on the size and the number of stacks of saggers.

Referring to FIG. 4, in the horizontal flow structure which is the comparative example shown in (A) of FIG. 4, an area vulnerable to gas (GA) flow depending on the enlarged size of the sagger 10 occurs, so that there is a restriction on the size (including height and area) of the sagger 300. However, in the vertical flow structures which are the experimental examples shown in (B), (C), and (D) of FIG. 4, occurrence of the area vulnerable to gas (GA) flow is minimized, so that there is no restriction on the size (height and area) of the sagger 300, and thus, production of the cathode material for a secondary battery (CM) in the same firing furnace (such as size, length, and configuration) may be increased by enlarging the size of the sagger 300 and also maintenance efficiency is improved by a decrease in the number of the saggers 300.

That is, the space vulnerable to gas flow is minimized, thereby adjusting the size of the sagger 300 in the firing surface of the same size, and thus, the production of the cathode material for a secondary battery (CM) is increased and the number of saggers 300 is decreased to provide the apparatus for firing a cathode material of a secondary battery having improved manufacturing efficiency of the cathode material for a secondary battery (CM).

Hereinabove, the exemplary embodiments of the present disclosure have been described in detail, but the right scope of the present disclosure is not limited thereto, and various modifications and improved forms by a person skilled in the art using a basic concept of the present disclosure as defined in the following claims also belong to the right scope of the present disclosure.

### [Reference signs list]

110: air supply part, 120: exhaust part, 130: firing space, 100: firing furnace 100, 200: heater, 300: sagger, 400: pusher

## Claims

1. An apparatus for firing a cathode material of a secondary battery which fires a cathode material for a secondary battery by moving the cathode material in a horizontal direction, the apparatus comprising:
a firing furnace including an air supply part which is placed in a lower portion and to which gas is supplied, an exhaust part which is placed in an upper portion and from which the gas is exhausted, and a firing space which is placed between the air supply part and the exhaust part and extended in a vertical direction intersecting the horizontal direction;
a heater which heats the firing space of the firing furnace;
a plurality of saggers which store the cathode material for a secondary battery and are stacked in the vertical direction in the firing space; and
a pusher which has the plurality of saggers settled therein and moves the plurality of saggers in the horizontal direction,
wherein the gas in the firing space moves in the vertical direction from a bottom to a top of the plurality of saggers and moves in the horizontal direction on the top of the plurality of saggers.

2. The apparatus for firing a cathode material of a secondary battery of claim 1, wherein:
the gas moves only in the vertical direction inside the plurality of saggers.

3. The apparatus for firing a cathode material of a secondary battery of claim 2, wherein:
each of the plurality of saggers includes:
a lower part which is positioned under the cathode material for a secondary battery and has a plurality of slits formed thereon;
a wall part which is positioned by a side of the cathode material for a secondary battery and seals the cathode material for a secondary battery in the horizontal direction; and
an opening which is formed by the wall part on the cathode material for a secondary battery and exposes the cathode material for a secondary battery.

4. The apparatus for firing a cathode material of a secondary battery of claim 3, wherein:
the gas moves from the plurality of slits through the cathode material for a secondary battery to the opening.

5. The apparatus for firing a cathode material of a secondary battery of claim 1, wherein:
the firing space includes a temperature rising space, a temperature maintaining space, and a cooling space, which are arranged sequentially in the horizontal direction.

6. The apparatus for firing a cathode material of a secondary battery of claim 5, wherein:
the pusher moves the plurality of saggers from the temperature rising space through the temperature maintaining space to the cooling space.

7. The apparatus for firing a cathode material of a secondary battery of claim 6, wherein:
the pusher stops the plurality of saggers for a predetermined time in each of the temperature rising space, the temperature maintaining space, and the cooling space.

8. The apparatus for firing a cathode material of a secondary battery of claim 5, wherein:
the gas includes:
a first sub-gas supplied to the temperature rising space,
a second sub-gas supplied to the temperature maintaining space, and
a third sub-gas supplied to the cooling space.

9. The apparatus for firing a cathode material of a secondary battery of claim 8, wherein:
each of the first sub-gas, the second sub-gas, and the third sub-gas is preheated to different temperatures from each other.

10. The apparatus for firing a cathode material of a secondary battery of claim 9, wherein:
the second sub-gas is preheated to a higher temperature than the first sub-gas and the third sub-gas.

11. The apparatus for firing a cathode material of a secondary battery of claim 8, wherein:
each the first sub-gas, the second sub-gas, and the third sub-gas has different flow rates from each other.

12. The apparatus for firing a cathode material of a secondary battery of claim 11, wherein:
the flow rate of the first sub-gas and the flow rate of the third sub-gas are higher than the flow rate of the second sub-gas.

13. The apparatus for firing a cathode material of a secondary battery of claim 8, wherein:
each of the first sub-gas, the second sub-gas, and the third sub-gas has different compositions from each other.

14. The apparatus for firing a cathode material of a secondary battery of claim 1, wherein:
the heater is extended in the vertical direction.

15. The apparatus for firing a cathode material of a secondary battery of claim 14, wherein:
the heater includes:
a first sub-heater which is placed in one side portion of the firing space;
a second sub-heater which is separated from the first sub-heater with the firing space interposed therebetween and placed in the other side portion of the firing space;
a third sub-heater which is placed between the first sub-heater and the second sub-heater inside the firing space; and
a fourth sub-heater which is placed in a lower portion the firing space.

16. The apparatus for firing a cathode material of a secondary battery of claim 1, wherein:
the pusher includes:
a large plate on which the plurality of saggers are settled; and
a moving part which moves the large plate in the horizontal direction.

17. The apparatus for firing a cathode material of a secondary battery of claim 16, wherein:
the large plate corresponds to the plurality of saggers and includes a through hole communicating with the air supply part.

18. The apparatus for firing a cathode material of a secondary battery of claim 1, wherein:
the cathode material for a secondary battery is in a granule or briquette form.

19. The apparatus for firing a cathode material of a secondary battery of claim 1, wherein:
the plurality of saggers are stacked in 3 layers to 30 layers in the vertical direction and move in the horizontal direction.
